# EUROPÄISCHE PATENTANMELDUNG

(11) **EP 0 762 260 A2**
(43) Veröffentlichungstag der Anmeldung: **12.03.1997**
(21) Anmeldenummer: 96114267.6
(22) Anmeldetag: 06.09.1996
(51) Int. Cl.: G06F 1/00

(54) **Vorrichtung zur Zuordnung der Benutzer in einem Computer-Netzwerk**

(30) Priorität: 08.09.1995 DE 19533209
(71) Anmelder: Jürgensen, Klaus, 36396 Steinau an der Strasse (DE)
(72) Erfinder: Jürgensen, Klaus, 36396 Steinau an der Strasse (DE)
(74) Vertreter: KEIL & SCHAAFHAUSEN Patentanwälte

(57) **Zusammenfassung**

Es wird eine Vorrichtung zur Zuordnung der Benutzer in einem Computer-Netzwerk beschrieben, mit einer Schnittstelle, insbesondere einer Netzschnittstelle, einer Netzwerkkarte und einer Identifikationsnummer zur Identifizierung des Computers im Computer-Netzwerk. Um eine einfache Zuordnung von Benutzerrechten mit üblichen und bestehenden Möglichkeiten des Computer-Netzwerk zu ermöglichen, ist vorgesehen, daß die Identifikationsnummer auf einem separaten Datenträger abgelegt ist, der zum Lesen der Identifikationsnummer mit der Schnittstelle lösbar verbindbar ist.

## Beschreibung

Die Erfindung betrifft eine Vorrichtung zur Zuordnung der Benutzer in einem Computer-Netzwerk, mit einer Schnittstelle, insbesondere einer Netzschnittstelle, einer Netzwerkkarte und einer Identifikationsnummer zur Identifizierung des Computers im Computer-Netzwerk.

Über auch als Netzschnittstellen bezeichnete "Schnittstellen" können Computer in ein Computer-Netzwerk eingebunden werden. Der Computer kann über diese Schnittstelle Daten und Informationen mit weiteren in das Netzwerk eingebundenen Computern austauschen. Eine solche Schnittstelle umfaßt nicht nur die apparative Verbindung des Computers mit dem Netzwerk, die z.B. durch eine Steckverbindung realisiert werden kann, sondern auch Vereinbarungen, sogenannte "Protokolle", über die Art und Weise, wie die Daten und Informationen ausgetauscht werden. Ein solches Protokoll, das auch als Kommunikationsprotokoll bezeichnet wird, enthält die Festlegung des algorithmischen Ablaufs beim Datenaustausch und macht damit Kommunikation im Netzwerk erst möglich.

Die zu der Schnittstelle gehörende Netzwerkkarte erhält durch den Hersteller heute üblicherweise eine eindeutige Nummer, durch die der Computer im Computer-Netzwerk identifiziert wird. Beim Aufbau der Verbindung zwischen dem Computer und dem Computer-Netzwerk meldet sich der Computer bei einem Netzwerk-Server mit dieser Identifikationsnummer an. Durch Vereinbarungen zwischen den Herstellern ist sichergestellt, daß jede Identifikationsnummer nur ein einziges Mal vorkommt und damit über die jeweilige Schnittstelle auch nur einem Computer zugeordnet wird.

Für Systemverwalter ist es nun möglich, die Rechte und die jeweilige Umgebung für die einzelnen Benutzer einer Datenverarbeitungsanlage mittels eines Benutzernamens, der über ein Passwort geschützt sein kann, und ggf. der Identifikationsnummer festzulegen. Anhand der Identifikationsnummer kann bestimmt werden, daß einzelne oder alle Benutzer sich nur von einem einzigen, mehreren ausgewählten oder allen Computern in das Computer-Netzwerk einloggen können. Von der Möglichkeit, die Nutzungsmöglichkeiten der Benutzer auf bestimmte Computer festzulegen, wird insbesondere in größeren Computer-Netzwerken regelmäßig Gebrauch gemacht oder wenn es darum geht, vertrauliche Daten vor unberechtigtem Zugriff zu schützen.

Üblicherweise wird die oben beschriebene Schnittstelle auf einer Platine untergebracht, die als sogenannte Netzwerkkarte in einen Computer einsteckbar ist. Die Identifikationsnummer ist in einem Speicherchip abgelegt, der fest mit der Netzwerkkarte verbunden ist. Damit ist die Identifikationsnummer, durch die der Computer im Computer-Netzwerk identifiziert wird, auf Dauer dem jeweiligen Computer zugeordnet.

Wenn Benutzerrechte und Arbeitsumgebungen so festgelegt werden, daß ein Benutzer nur an einem bestimmten, durch seine Identifikationsnummer ausgewiesenen Computer arbeiten kann, wird die Flexibilität des Computer-Netzwerks erheblich eingeschränkt. Ein kurzfristiger Wechsel des Arbeitsplatzes, dem ein Computer zugeordnet ist, ist für den Benutzer nicht möglich, da seine Benutzungsrechte an dem mit einer anderen Identifikationsnummer versehenen Computer nicht gelten. In diesem Fall muß der Systemverwalter zunächst die Nutzungsrechte auf die Identifikationsnummer des neuen Computers umschreiben. Aber selbst das einfache Auswechseln eines defekten Computers ist problematisch, da der Systemverwalter zunächst die Nutzungsrechte des Benutzers auf die Identifikationsnummer des Austauschcomputers umschreiben muß. Wegen des damit verbundenen Aufwandes ist dies äußerst nachteilig. In den Fällen, in denen die Benutzer nicht nur gelegentlich, sondern regelmäßig ihren Arbeitsplatz wechseln, ist eine derartige Computer-Netzwerk-Absicherung unpraktikabel. Wenn ein Unternehmen gar völlig darauf verzichtet, Mitarbeitern feste Arbeitsplätze zur Verfügung zu stellen, ist eine Zuweisung von Nutzungsrechten und Arbeitsumgebungen über eine Identifikationsnummer eines Computers nicht durchführbar. Der Betreiber eines Computer-Netzwerks kann sich daher bei der Einrichtung eines Netzwerks letztlich nur entscheiden, ob er entweder zugunsten der Sicherheit eine unflexible Lösung in Kauf nimmt, indem er die Rechte und die entsprechende Umgebung für einzelne Benutzer anhand der Identifikationsnummern festlegt, oder ob er für eine größere Flexibilitat eine geringe Sicherheit im Netz in Kauf nimmt.

Aufgabe der vorliegenden Erfindung ist es daher, eine Vorrichtung der eingangs genannten Art zu schaffen, mit der eine einfache Zuordnung von Benutzerrechten mit üblichen und bestehenden Möglichkeiten des Computer-Netzwerks möglich ist.

Diese Aufgabe wird erfindungsgemäß dadurch gelöst, daß die Identifikationsnummer auf einem separaten Datenträger abgelegt ist, der zum Lesen der Identifikationsnummer mit der Schnittstelle lösbar verbindbar ist.

Damit kann sich jeder Anwender mit seinem speziellen Datenträger im Rahmen der ihm eingeräumten Benutzerrechte an jedem Computer in das Computer-Netzwerk einloggen, wozu er lediglich den separaten Datenträger mit der Schnittstelle zu verbinden hat. So kann man an verschiedenen Arbeitsplätzen arbeiten, wobei nur der separate Datenträger mitzunehmen ist. Auch ist der Austausch eines defekten Computers jederzeit möglich, ohne daß der Systemverwalter Benutzerzuweisungen neu einrichten müßte. Da nur derjenige, der den Datenträger mit der einmaligen Identifikationsnummer besitzt, im Computer-Netzwerk die jeweiligen Benutzerrechte geltend machen kann, ist eine hohe Sicherheit gegen unbefugte Benutzung eines Computers im Netzwerk und gegen unberechtigten Zugriff auf Daten gewährleistet.

Dieses Sicherheitssystem ist schwierig zu umgehen, da es auf der niedrigen Systemebene angesiedelt ist; ohne den Datenträger ist ein Zugang in das Computer-Netzwerk nicht möglich. Andererseits können bei Verlust des Datenträgers oder wenn die Benutzerrechte nicht mehr benötigt werden, die Nutzungsrechte auf einfache Weise gelöscht werden, so daß der jeweilige Datenträger funktionslos wird. Mit der erfindungsgemäßen Vorrichtung können eindeutige Benutzerzuweisungen sicher und ohne Schulungen eingerichtet werden. Nicht nur die Flexibilität, sondern auch die Sicherheit werden gegenüber bestehenden Systemen erhöht, obwohl letztendlich nur die bestehenden Möglichkeiten eines Computer-Netzwerks verwendet werden. Da die Benutzerzuweisungen und Benutzerrechte anhand der Identifikationsnummer festgelegt werden, ist die Schnittstelle einer erfindungsgemäßen Vorrichtung mit bestehenden Netzwerksystemen kompatibel und kann selbst nachträglich in ein Computer-Netzwerk integriert werden, indem lediglich die Netzwerkkarten mit den jeweiligen Schnittstellen ausgetauscht werden.

Gemäß einer vorteilhaften Ausgestaltung der Erfindung ist der Datenträger eine Chipkarte. Zum einen ist eine solche Chipkarte, die auch als Kredit- und Telefonkarte Verwendung findet, nur schwer zu fälschen, was die Sicherheit erhöht. Zum anderen sind solche Chipkarten billig, leicht zu programmieren und unempfindlich gegenüber mechanischen Beanspruchungen oder Magnetfeldern.

Besonders einfach kann die Verbindung der Chipkarte mit der Schnittstelle erfindungsgemäß dadurch erfolgen, daß die Chipkarte mit ihren Anschlußkontakten direkt mit einer Platine des Computers, insbesondere dessen Netzwerkkarte, lösbar verbindbar ist.

In Weiterbildung dieses Erfindungsgedankens ist vorgesehen, daß die Chipkarte zum Lesen der Identifikationsnumer mit einer Leseeinheit verbindbar ist, die zur Übertragung der Identifikationsnummer mit der Schnittstelle des Computers verbunden ist. Eine solche Leseeinheit kann in einfacher Weise an beliebiger Stelle im Gehäuse des Computers angeordnet werden und bspw. durch einen Gehäuseschlitz von außen leicht zugänglich sein.

Der Datenträger wird erfindungsgemäß besonders kostengünstig, wenn er eine Magnetkarte oder eine Prägekarte ist.

Gemäß einer noch weiteren Ausführungsform der Erfindung ist vorgesehen, daß der Datenträger eine Laserkarte ist.

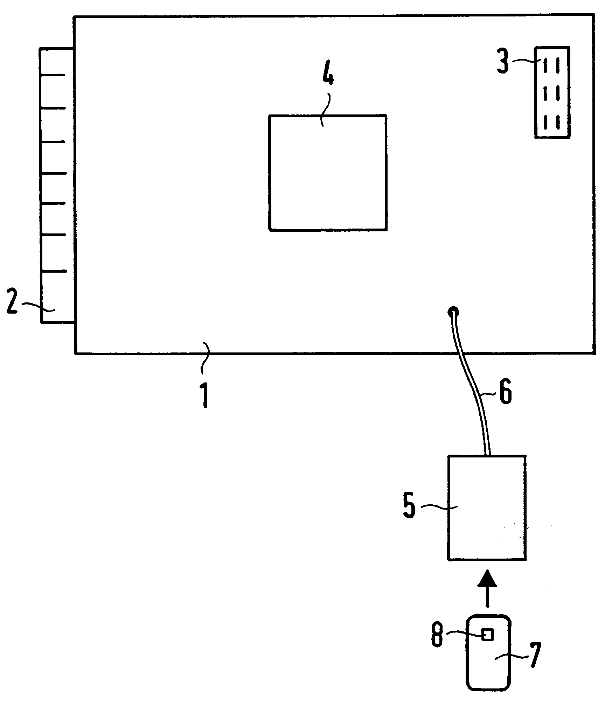

Weitere Merkmale, Vorteile und Anwendungsmöglichkeiten der Erfindung ergeben sich aus der nachfolgenden Beschreibung eines Ausführungsbeispiels nach der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Die einzige Figur zeigt in schematischer Darstellung eine Netzwerkkarte 1, die zum Einstecken in einen (nicht dargestellten) Computer eine Kontaktleiste 2 zur Verbindung mit dem Bus des Computers aufweist. Auf der Netzwerkkarte 1 ist eine Schnittstelle zum Einbinden des Computers in ein Computer-Netzwerk vorgesehen. Zum Anschluß an eine Netzwerkleitung ist auf der Netzwerkkarte 1 ein Steckkontakt 3 vorgesehen. Die Schnittstelle weist außerdem eine Steuerungseinheit 4 auf, durch die der Datenaustausch zwischen dem Computer und dem Netzwerk gemäß einem Kommunikationsprotokoll gesteuert wird. Eine Leseeinheit 5 ist über ein Kabel 6 mit der Schnittstelle auf der Netzwerkkarte 1 verbunden. Eine Chipkarte 7 weist einen Speicherchip 8 auf, in dem die Identifikationsnummer der Schnittstelle zur Identifizierung des Computers im Computer-Netzwerk gespeichert ist. Die Chipkarte 7 mit dem Speicherchip 8 ist in einen (nicht dargestellten) Schlitz der Leseeinheit 5 zum Lesen der Identifikationsnummer einschiebbar.

Zur Montage der Schnittstelle wird die Netzwerkkarte 1 mit der Kontaktleiste 2 an der dafür vorgesehenen Stelle in dem Computer eingesteckt. An einem Netzwerk-Server wird die Identifikationsnummer der Schnittstelle eingegeben und festgelegt, welche Benutzerrechte unter dieser Identifikationsnummer verfügbar sein sollen. Über den Steckkontakt 3 wird die Schnittstelle mit einer Netzwerkleitung verbunden, womit das über die Schnittstelle verbundene System/Computer-Netzwerk betriebsbereit ist.

Um sich nun im Computer-Netzwerk anzumelden, steckt der Benutzer zunächst seine Berechtigungskarte in Form der Chipkarte 7 mit dem Speicherchip 8 in die Leseeinheit 5 des Computers, mit dem er arbeiten will. Durch den Speicherchip 8 wird die gespeicherte Identifikationsnummer der Schnittstelle auf der Netzwerkkarte 1 zugänglich gemacht. Jetzt kann der Benutzer die Verbindung zwischen dem Computer und dem Netzwerk herstellen, indem er sich einloggt. Der Computer meldet sich dabei mit der von der Chipkarte 7 gelesenen Identifikationsnummer im Netzwerk an. Der Benutzer erhält nun die Benutzerrechte, die zuvor im Netzwerk-Server festgelegt worden sind. Darüber hinaus ist es möglich, zusätzlich die Eingabe eines Benutzernamens und eines Passwords vorzusehen, wodurch die Sicherheit des Systems weiter erhöht wird. Anstelle einer Chipkarte kann ein beliebiger Datenträger, wie eine z.B. Magnetkarte, eine Prägekarte oder eine Laserkarte verwendet werden.

## Patentansprüche

1. Vorrichtung zur Zuordnung der Benutzer in einem Computer-Netzwerk, mit einer Schnittstelle, insbesondere einer Netzschnittstelle, einer Netzwerkkarte (1) und einer Identifikationsnummer zur Identifizierung des Computers im Computer-Netzwerk, **dadurch gekennzeichnet**, daß die Identifikationsnummer auf einem separaten Datenträger (7) abgelegt ist, der zum Lesen der Identifikationsnummer mit der Schnittstelle lösbar verbindbar ist.

2. Vorrichtung nach Anspruch 1, **dadurch gekennzeichnet**, daß der Datenträger eine Chipkarte (7) ist.

3. Vorrichtung nach Anspruch 2, **dadurch gekennzeichnet**, daß die Chipkarte (7) mit ihren Anschlußkontakten direkt mit einer Platine des Computers, insbesondere dessen Netzwerkkarte (1) lösbar verbindbar ist.

4. Vorrichtung nach einem der Ansprüche 2 oder 3, **dadurch gekennzeichnet**, daß die Chipkarte (7) zum Lesen der Identifikationsnummer mit einer Leseeinheit (5) verbindbar ist, die zur Übertragung der Identifikationsnummer mit der Schnittstelle des Computers verbunden ist.

5. Vorrichtung nach Anspruch 1, **dadurch gekennzeichnet**, daß der Datenträger eine Magnetkarte ist.

6. Vorrichtung nach Anspruch 1, **dadurch gekennzeichnet**, daß der Datenträger eine Prägekarte ist.

7. Vorrichtung nach Anspruch 1, **dadurch gekennzeichnet**, daß der Datenträger eine Laserkarte ist.
